# EUROPÄISCHE PATENTSCHRIFT

(11) **EP 1 167 831 B1**
(45) Veröffentlichungstag und Bekanntmachung des Hinweises auf die Patenterteilung: **23.03.2011**
(21) Anmeldenummer: 01115270.9
(22) Anmeldetag: 25.06.2001
(51) Int. Cl.: F16H 59/12

(54) **Bedienungsvorrichtung zur Schaltsteuerung eines Kraftfahrzeuggetriebes**
Actuating device for controlling shifting of vehicle transmission
Dispositif de commande pour changement de vitesses de transmission de véhicule

(30) Priorität: 28.06.2000 DE 10031367
(43) Veröffentlichungstag der Anmeldung: 02.01.2002
(73) Patentinhaber: Volkswagen Aktiengesellschaft, 38436 Wolfsburg (DE)
(72) Erfinder: Kruse, Georg, 38518 Gifhorn (DE)

(56) Entgegenhaltungen:
- EP-A- 0 096 352
- DE-A- 3 941 665
- DE-A- 19 509 472
- DE-B- 1 194 269
- FR-A- 2 715 613
- US-A- 2 848 902
- US-A- 2 861 464
- PATENT ABSTRACTS OF JAPAN Bd. 014, Nr. 155 (M-0954), 26. März 1990 (1990-03-26) -& JP 02 017265 A (ISEKI & CO LTD), 22. Januar 1990 (1990-01-22)

## Beschreibung

Die Erfindung betrifft eine Bedienungsvorrichtung zur Schaltsteuerung eines Kraftfahrzeuggetriebes, dessen Schaltvorgänge nicht mechanisch ansteuerbar und hilfskraftgestützt durchführbar sind, und das in einem Manuellmodus mit weitgehend manueller Schaltauslösung und / oder in einem Automatikmodus mit weitgehend automatischer Schaltauslösung betreibbar ist, wobei ein Tastenfeld mit Tasten anstelle eines Schalt- bzw. Wählhebels zur Auslösung der Schaltvorgänge vorgesehen ist, das Tastenfeld an einem ergonomisch günstigen Ort im Fahrerraum des Kraftfahrzeuges angeordnet ist und die Tasten in dem Tastenfeld taktil identifizierbar ausgebildet und angeordnet sind.

Bei dem betreffenden Kraftfahrzeuggetriebe kann es sich um ein automatisiertes Stufenschaltgetriebe (ASG), ein klassisches Automatikgetriebe (Stufenautomatikgetriebe) oder um ein stufenlos verstellbares Automatikgetriebe handeln. Diese Getriebe können bei elektrischer bzw. elektronischer Steuerung und hilfskraftgestützter Durchführung der Schalt- bzw. Verstellvorgänge auslegungsbedingt entweder jeweils ausschließlich oder zusätzlich durch den Fahrer umschaltbar wahlweise in einem Manuellmodus mit manueller Schaltauslösung oder in einem Automatikmodus mit automatischer Schaltauslösung betrieben werden, wobei die jeweilige Schaltauslösung je nach Bauart des Getriebes mit Ausnahme von Sonderfunktionen einen Gangwechsel, einen Fahrstufenwechsel oder eine Übersetzungsverstellung zur Folge hat. Dabei können die zur Durchführung der Schalt- bzw. Verstellvorgänge vorgesehenen hilfskraftbetriebenen Stellantriebe hydraulisch, pneumatisch, elektromagnetisch, elektromotorisch oder in anderer Weise ausgebildet sein.

Nach dem Stand der Technik werden Schalt- bzw. Wählhebel als Bedienungselement für das Kraftfahrzeuggetriebe verwendet, die in der Mittelkonsole des Fahrzeuginnenraums angeordnet sind. Im Automatikmodus werden die Automatikfahrstufen durch eine Verschiebung des Schalt- bzw. Wählhebels innerhalb einer Automatikschaltgasse mit einem für Automatikgetriebe üblichen P-R-N-D-Schema eingestellt.

Zur Schaltung der Gänge im Manuellmodus sind mehrere Lösungen bekannt, die alternativ oder isoliert einsetzbar sind. So sind z. B. sogenannte Tiptronicschaltungen bekannt, bei denen die Gänge durch Antippen bzw. Bewegen des Schalt- bzw. Wählhebels in einer zusätzlichen, parallel oder senkrecht zur Automatikschaltgasse angeordneten Manuellschaltgasse sequentiell hoch- und runtergeschaltet werden können. Bei einigen Kraftfahrzeugen sind ergänzend oder alternativ hierzu Bedienungselemente im Lenkradbereich angeordnet, durch die ebenfalls eine sequentielle Schaltung der Gänge im Manuellmodus möglich ist. Als Bedienungselemente sind eine auf einer Seite des Lenkradkranzes in Griffnähe angeordnete Schaltwippe oder separate auf beiden Seiten des Lenkradkranzes oder dahinter angeordnete Druck- bzw. Zugschalter bekannt, die z.B. links zum Zurückschalten und rechts zum Hochschalten bestimmt sein können.

Üblicherweise wird jedoch auf den Schalt- bzw. Wählhebel nicht verzichtet. Dieser stellt zusammen mit seiner Lagerung und einer Sensorik zur Erfassung der momentanen Schaltposition eine relativ teure Baueinheit dar. Im übrigen kann ein Schalt- oder Wählhebel trotz einer weitgehend runden Formgestaltung und einer Verkleidung mit einem weichen Material aufgrund seiner in den Fahrzeuginnenraum hineinragenden Anordnung bei Unfällen unter Umständen zu Verletzungen der Fahrzeuginsassen führen. Es gibt daher verschiedene Vorschläge zur alternativen Ausbildung und Anordnung von Betätigungselementen u.a. zur Schaltsteuerung von Getrieben.

So ist beispielsweise aus der DE 44 23 744 C2 ein Fahrzeuglenkrad bekannt, bei dem ein oder mehrere Betätigungselemente an der inneren Umfangsfläche des Lenkradkranzes und / oder auf einem an der inneren Umfangsfläche befindlichen Schaltpaneel angeordnet sind. Die Betätigungselemente können als Druckschalter, Kippschalter, Sensorschalter, Drehrädchen, und Bewegungsschalter ausgebildet und mittels unterschiedlicher Größen und / oder ertastbarer Symbole unterscheidbar sein. Zwar befinden sich die Betätigungselemente in unmittelbarer Griffnähe des Lenkrades und sind somit für einen Fahrer leicht erreichbar, ohne dass dieser durch seine Orientierung und Identifikation der Schalter stark abgelenkt wird. Nachteilig ist jedoch, dass das Fahrzeuglenkrad im Falle einer alleinigen Bedienung des Fahrzeuggetriebes über dort angeordnete Betätigungselemente derart mit Schaltern überladen wäre, dass es zu Fehlbedienungen kommen kann. Im übrigen wäre ein derartiges Fahrzeuglenkrad relativ teuer.

In der DE 195 09 472 A1 wird dagegen eine im Innenraum eines Kraftfahrzeuges anordenbare Schalttafel mit zwei, maximal drei Tasten vorgeschlagen, wobei eine Plustaste zum Hochschalten, eine Minustaste zum Zurückschalten und ggf. eine dritte Taste zum Einlegen des Rückwärtsganges vorgesehen ist. Die Schalttafel soll sich auf einem Rohrträger in Griffnähe des Fahrers befinden. Zur besseren Unterscheidung können insbesondere die Plus- und die Minustaste in unterschiedlichen Ebenen bzw. in zueinander geneigten Ebenen angeordnet sein. Zur Information des Fahrers ist eine Ganganzeige im Armaturenbrett des Kraftfahrzeuges vorgesehen. Die Funktionalität der vorgeschlagenen Lösung ist weitgehend identisch mit bekannten, am Lenkrad angeordneten Schaltvorrichtungen zur Auslösung sequentieller Schaltvorgänge, jedoch mit schlechteren ergonomischen Eigenschaften. Der volle Funktionsumfang zur Bedienung eines wahlweise manuell und automatisch schaltbaren Getriebes ist mittels einer derartigen Schalttafel nicht erreichbar.

Weiter ist in der EP 0 493 475 M1 ein elektrisches Gangschaltgerät offenbart, das zur vollständigen Schaltsteuerung eines Automatikgetriebes einschließlich eines zugeordneten Verteilergetriebes vorgesehen ist. Das Gangschaltgerät weist u.a. ein Gehäuse mit einer Schalttafel auf, in der eine Vielzahl von Druckknöpfen mit jeweils einer zugeordneten Anzeigelampe in Reihe angeordnet sind. Durch Drücken eines der Druckknöpfe wird die betreffende Fahrstufe des Automatikgetriebes bzw. die betreffende Schaltfunktion des Verteilergetriebes aktiviert, was dem Fahrer durch ein Aufleuchten der zugeordneten Anzeigelampe angezeigt wird. Bei dem vorgeschlagenen Gangschaltgerät ist von Nachteil, dass die Druckknöpfe relativ unübersichtlich angeordnet und ohne visuelle Orientierung nicht identifizierbar sind, so dass der Fahrer sowohl zur Auslösung eines Schaltvorganges als auch zur Überprüfung des momentanen Schaltzustandes den Blick von der Fahrbahn abwenden und auf die Schalttafel richten muss.

Schließlich ist aus der EP 0 096 352 A2 eine gattungsbildende Bedienvorrichtung bekannt, bei der anstelle des Schalt- bzw. Wählhebels zur Auslösung der Schaltvorgänge ein Tastenfeld vorgesehen ist, in dem eine Mehrzahl von Tasten zur Ansteuerung unterschiedlicher Schaltzustände bzw. -bereiche ringförmig um eine Schaltfreigabetaste angeordnet sind. Zum Wechsel eines Schaltzustandes ist die jeweils zugeordnete Taste gemeinsam mit der Schaltfreigabetaste zu drücken.

Es ist daher die Aufgabe der vorliegenden Erfindung eine Bedienvorrichtung zur Verfügung zu stellen, die unabhängig von den individuellen Fahrerproportionen als ergonomisch gleichermaßen günstig empfunden wird. Darüber hinaus sollten eine hohe Funktionssicherheit und geringe Herstellungskosten gegeben sein.

Diese Aufgabe wird erfindungsgemäß in Verbindung mit den Merkmalen des Oberbegriffs des Anspruches 1 dadurch gelöst, dass das Tastenfeld zur individuellen fahrerbezogenen Justierbarkeit verstellbar ausgebildet und angeordnet ist.

Vorteilhafte Ausgestaltungen des erfindungsgemäßen Verfahrens sind in den Ansprüchen 2 bis 25 angegeben.

Wie erwähnt, können bei Verwendung eines Kraftfahrzeuggetriebes, das elektrisch steuerbar ist, dessen Schaltvorgänge hilfskraftgestützt durchführbar sind, und das in einem Manuellmodus mit weitgehend manueller Schaltauslösung und / oder in einem Automatikmodus mit weitgehend automatischer Schaltauslösung betreibbar ist, Schaltvorgänge prinzipiell auf beliebige Weise durch Öffnen oder Schließen eines elektrischen Kontaktes ausgelöst werden. Im Vergleich zu einem Schalt- oder Wählhebel bietet ein Tastenfeld mit Tasten den Vorteil einer erheblichen Kosteneinsparung bei mindestens gleich guter Funktionssicherheit. Als positiver Nebeneffekt ergibt sich noch eine Erhöhung der passiven Sicherheit durch die Anordnung einer weitgehend ebenen Fläche des Tastenfeldes anstelle eines relativ stumpfen, in den Innenraum des Kraftfahrzeuges hineinragenden Gegenstandes des Schalt- bzw. Wählhebels.

Durch die ergonomisch günstige Anordnung des Tastenfeldes und die taktil identifizierbare Ausbildung und Anordnung der Tasten in dem Tastenfeld ergibt sich eine hohe Bedienungssicherheit. Das Tastenfeld ist für den Fahrer komfortabel, d.h. ohne eine Veränderung der Sitzposition erreichbar. Erfindungsgemäß ist daher vorgesehen, dass das Tastenfeld zur individuellen fahrerbezogenen Justierbarkeit verstellbar ausgebildet und angeordnet ist, sodass nach kurzer Lernphase die taktil identifizierbaren Tasten leicht erreichbar und die zugeordneten Funktionen ohne visuellen Kontakt auslösbar sind. Insgesamt ergibt sich dadurch eine Erhöhung der Fahrsicherheit.

Zur Realisierung der erfindungsgemäßen Verstellbarkeit kann das Tastenfeld insbesondere in Fahrzeuglängsrichtung verschiebbar und / oder um eine Hochachse drehbar ausgebildet sein, wodurch eine individuelle Anpassung an unterschiedliche Körpergrößen und Sitzpositionen der Fahrer möglich ist.

Speziell zur Realisierung der Drehbarkeit ist es besonders vorteilhaft, wenn das Tastenfeld rund ausgebildet ist, da dadurch Überdeckungsprobleme mit angrenzenden Bauteilen vermieden werden können. Darüber hinaus kann das Tastenfeld auch in einem drehbar gelagerten trommelförmigen Gehäuse angeordnet sein, das u.U. auch höhenverstellbar ausgebildet sein kann.

Das Tastenfeld kann, abhängig von der zugrundeliegenden Getriebebauart und der Fahrzeugausstattung, als Ergänzung oder Alternative zu weiteren Bedienungselementen, z. B. einer am Lenkrad angeordneten Schaltwippe, oder als alleinige Bedienungsvorrichtung verwendet werden. Es weist jedoch vorteilhaft mindestens eine Taste zur Auslösung einer Feststellung des Kraftfahrzeuges im Stillstand (STOP- oder P-Taste), eine Taste zur Auslösung einer Schaltung in den Rückwärtsgang (R-Taste), eine Taste zur Auslösung einer Schaltung in den Leerlauf bzw. einer Trennung des Antriebsstranges von dem Antriebsmotor (N-Taste), und eine Taste zur Auslösung einer Aktivierung des Vorwärtsfahrbereiches und / oder zur Aktivierung des Automatikmodus (E- oder D-Taste) auf, da die entsprechenden Funktionen unter Berücksichtigung der Übersichtlichkeit, des Bedienungskomforts und der Kosten anderswo nur schwer sinnvoll anzuordnen sind.

Bei alleiniger Verwendung des Tastenfeldes zur Bedienung der Schaltsteuerung sollte das Tastenfeld zusätzlich eine Taste zur Sperrung eines oder mehrerer hoher Gänge bzw. zur Aktivierung von Hochschaltbegrenzungsstufen ("-"-Taste) aufweisen. Diese Funktion ermöglicht die Ausnutzung der Bremswirkung des Antriebsmotors bei Bergabfahrten mit hoher Zuladung zur Vermeidung einer Überlastung der Fahrzeugbremsen. Eine Anordnung eines Bedienungselementes hierfür kann zwar auch an andere Stelle erfolgen. Aus Komfort- und Kostengründen ist jedoch eine Integration einer entsprechenden Taste in dem Tastenfeld sinnvoll und vorteilhaft.

Zur Einsparung oder als durch den Fahrer wählbare Alternative zu einer am Lenkrad angeordneten Schaltwippe oder entsprechenden Zugschaltern kann das Tastenfeld auch zusätzlich zwei Tasten ("+"- / "-"-Tasten) oder eine Schaltwippe zur manuellen Schaltauslösung im Manuellmodus und / oder zur Aktivierung des Manuellmodus aufweisen. Ist ein Kraftfahrzeuggetriebe wahlweise im Automatikmodus oder im Manuellmodus betreibbar, so wird zumeist kein spezielles Umschaltelement vorgesehen, sondern ein Wechsel in den Automatikmodus erfolgt durch eine Betätigung eines typischen Automatikbedienungselementes, hier der E- oder D-Taste, und ein Wechsel in den Manuellmodus durch eine Betätigung eines typischen Manuellbedienungselementes, hier einer der "+"- / "-"-Tasten oder der Schaltwippe.

Im Falle mehrerer, im Automatikmodus verfügbarer Steuerungsprogramme, z. B. einem Winter- und einem Sommerprogramm und/oder einem Spar- oder ECO-Modus und einem Sportmodus, kann das Tastenfeld zusätzlich eine oder mehrere Tasten oder einen Schalter zum Wechsel zwischen diesen Steuerungsprogrammen aufweisen.

Zur ergonomisch günstigen, d.h. komfortabel erreichbaren und ermüdungsfrei bedienbaren, Positionierung kann das Tastenfeld, je nach Fahrzeuggattung und den gegebenen Platzverhältnissen, auf, an oder in der Mittelkonsole, oder auf, an oder in dem Armaturenbrett des Kraftfahrzeuges oder einer mit dem Armaturenbrett in Verbindung stehenden Konsole, oder auf, an oder in einem Satellitenträger der Lenksäule des Kraftfahrzeuges angeordnet sein.

Es ist jedoch auch möglich, das Tastenfeld auf, an oder in einer Türverkleidung der Fahrertür oder einer mit der Fahrertür in Verbindung stehenden Konsole anzuordnen, was z.B. bei Vorhandensein einer durchgehenden Sitzbank vorteilhaft sein kann. In diesem Fall muss sich der Fahrer zwar daran gewöhnen, mit der jeweils anderen als der gewohnten Hand zu schalten bzw. die Schaltvorgänge auszulösen. Dies ist aber erfahrungsgemäß in kurzer Zeit problemlos möglich, zumal so die rechte und in der Regel stärkere Hand beim Schalten am Lenkrad verbleiben kann.

Um eine taktile Identifizierung der Tasten innerhalb des Tastenfeldes zu gewährleisten, sollten die Tasten in einem einfachen nichtlinearen Schema, beispielsweise nicht in Reihe, angeordnet sein, wobei jeder Taste eine eindeutig identifizierbare Position in dem Schema zugeordnet sein sollte.

Desweiteren weisen die Tasten des Tastenfeldes vorteilhaft unterschiedliche Grundformen auf, anhand der sie taktil identifizierbar sind. So können die Tasten beispielsweise rund, oval, quadratisch, rhombusförmig oder dreieckig ausgebildet sein.

Zur weiteren Verbesserung der Unterscheidbarkeit bzw. Verbesserung der Bedienungssicherheit können die Tasten des Tastenfeldes unterschiedlich groß ausgebildet sein. Besonders die N-Taste, durch deren Betätigung der Antriebsmotor vom Antriebsstrang getrennt werden kann, sollte in Relation zu den übrigen Tasten größer ausgebildet sein, da dieser Taste in bestimmten Notsituationen, wie z. B. bei einer ungewollten Beschleunigung oder einer Notbremsung, eine besondere Sicherheitsfunktion zukommt, und diese Taste dann schnell und sicher identifiziert und betätigt werden sollte. Um jedoch eine ungewollte Betätigung zu vermeiden kann die N-Taste bei entsprechend großer Ausbildung auch einen größeren Betätigungswiderstand aufweisen.

Als weiteres Unterscheidungsmerkmal können die Tasten unterschiedlich vertieft und / oder erhaben in dem Tastenfeld angeordnet sein. Insbesondere sollten die STOP- bzw. P-Taste und die N-Taste vertieft und / oder die R-Taste und die D- bzw. E-Taste erhaben in dem Tastenfeld angeordnet sein, wodurch die STOP- bzw. P-Taste und die N-Taste dann gegen eine versehentliche Betätigung geschützt sind.

Schließlich können die Tasten des Tastenfeldes auch unterschiedliche Oberflächenkonturen aufweisen, um taktil unterscheidbar zu sein. So können die Oberflächen der Tasten unterschiedlich gewölbt sein, d.h. ein- und / oder zweidimensional konvex, konkav und / oder eben ausgebildet sein, mit unterschiedlichen Oberflächenstrukturen versehen sein, z.B. geriffelt, genoppt und / oder glatt ausgebildet sein, und / oder ertastbare Symbole, beispielsweise Ziffern oder Piktogramme, aufweisen.

Als Ergänzung zur taktilen Unterscheidbarkeit können die Tasten auch unterschiedliche Farbkennzeichnungen aufweisen, die sowohl die Grundfarbe als auch die Beschriftung bzw. die Symbole betreffen können. Durch eine derart erzielbare visuelle Unterscheidbarkeit wird das Erlernen der Tastenfunktionen und -positionen sowie eine Orientierung bei gelegentlichen Kontrollblicken wesentlich erleichtert.

Entsprechend ist es bei Dunkelheit von Vorteil, wenn die Tasten beleuchtbar ausgebildet sind, wobei die Tastenbeleuchtung einheitlich in einem Farbton oder zur besseren Unterscheidbarkeit unterschiedlich in mehreren Farbtönen ausgebildet sein kann. Um den aktuellen Betriebs- oder Schaltstatus erkennen zu können, ist die Tastenbeleuchtung vorteilhaft abhängig vom Aktivierungsstatus in der Helligkeit und / oder in der Farbe veränderbar ausgebildet. Eine derartige Funktion ist aber auch dadurch realisierbar, dass das Tastenfeld zur Anzeige des Aktivierungsstatus mit einer Statusanzeige kombiniert ist, wobei die Statusanzeige vorteilhaft im Blickfeld des Fahrers, z.B. in einem zentralen Armaturenpanel, angeordnet ist.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:
- Figur 1:: Eine perspektivische Darstellung einer Bedienungsvorrichtung im Innenraum eines Kraftfahrzeuges,
- Figur 2:: eine Draufsicht der Bedienungsvorrichtung von Fig. 1,
- Figur 3:: eine Seitenansicht der Bedienungsvorrichtung von Fig. 2 und einer weiteren,
- Figur 4: eine Draufsicht einer weiteren Bedienungsvorrichtung.

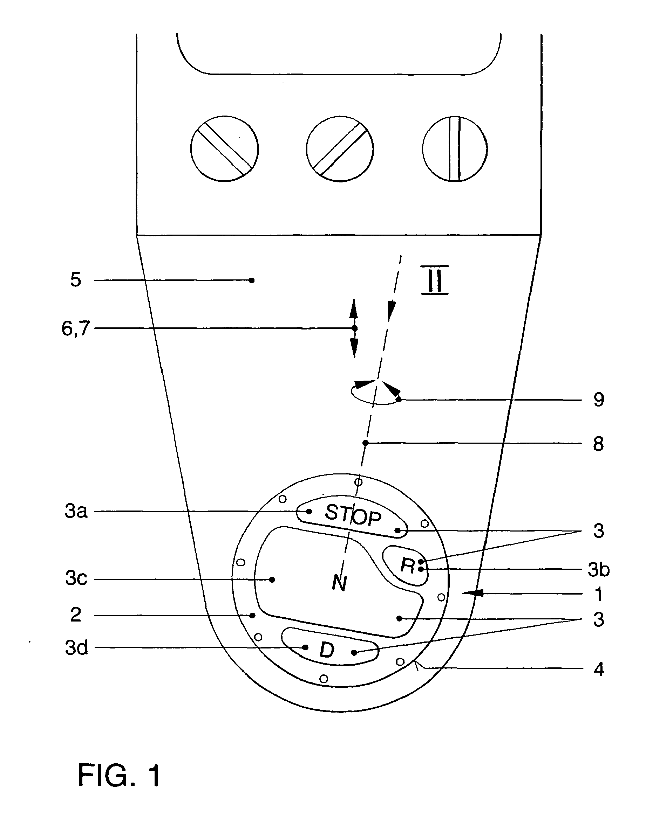

Die in der Fig. 1 dargestellte Bedienungsvorrichtung 1 zur Schaltsteuerung eines Kraftfahrzeuggetriebes ist als Tastenfeld 2 mit Tasten 3 zur Auslösung von Schaltvorgängen ausgebildet. Das Tastenfeld 2 weist eine runde Grundform 4 auf und ist anstelle eines Schalt- bzw. Wählhebels in der Mittelkonsole 5 des Kraftfahrzeuges angeordnet. Zur Anpassung an individuelle Körpergrößen und Sitzpositionen verschiedener Fahrer ist das Tastenfeld 2 in der Mittelkonsole 5 in Fahrzeuglängsrichtung 6 verschiebbar 7 und um eine Hochachse 8 drehbar 9 ausgebildet und angeordnet. Somit ist eine ergonomisch günstige, d.h. leicht erreichbare und ermüdungsfrei bedienbare, Positionierung und Ausrichtung des Tastenfeldes 2 möglich.

Das Tastenfeld 2 weist eine Taste 3a zur Auslösung einer Feststellung des Kraftfahrzeuges im Stillstand, die mit der Beschriftung STOP versehen ist, eine Taste 3b zur Auslösung einer Schaltung in den Rückwärtsgang, die mit der Beschriftung R versehen ist, eine Taste 3c zur Auslösung einer Schaltung in den Leerlauf bzw. einer Trennung des Antriebsstranges von dem Antriebsmotor, die mit der Beschriftung N versehen ist, und eine Taste 3d zur Auslösung einer Aktivierung des Vorwärtsfahrbereiches und zur Aktivierung des Automatikmodus, die mit der Beschriftung D versehen ist, auf. In der vorliegenden Form ist das Tastenfeld 2 in Verbindung mit weiteren, z.B. am Lenkrad des Kraftfahrzeuges angeordneten Schaltelementen, wie beispielsweise einer Schaltwippe, einsetzbar. Bei alleiniger Verwendung des Schaltfeldes 2 zur Bedienung des zugeordneten Getriebes wäre mindestens eine weitere Taste zur Sperrung eines oder mehrerer hoher Gänge bzw. zur Aktivierung von Hochschaltbegrenzungsstufen erforderlich.

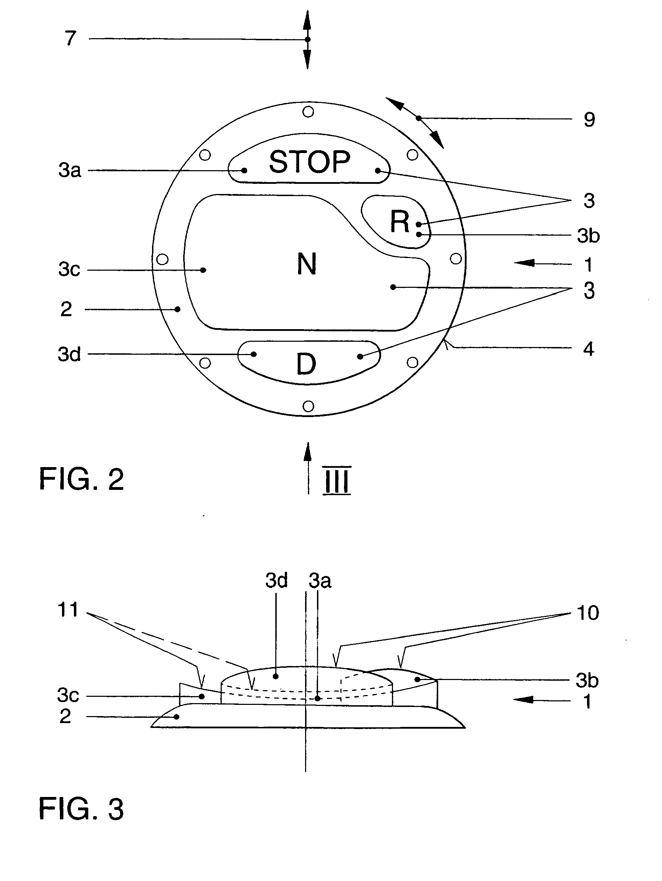

Wie auch der Fig. 2, in der das Tastenfeld 2 als Einzelteil in einer Draufsicht II nach Fig 1 dargestellt ist, zu entnehmen ist, sind die Tasten 3 in dem Tastenfeld 2 in einem einfachen und eindeutigen Schema angeordnet und weisen unterschiedliche Größen und Grundformen auf. So ist die N-Taste 3c zentral angeordnet und relativ groß ausgebildet, damit sie sicher und schnell identifiziert und betätigt werden kann, was in bestimmten Notsituationen, wie z.B. bei einer ungewollten Beschleunigung des Kraftfahrzeuges oder bei einer Notbremsung, wichtig ist.

In Fig. 3, die das Tastenfeld 2 in einer in Blickrichtung III nach Fig. 2 gerichteten Seitenansicht zeigt, ist erkennbar, dass sich die Tasten 3 zusätzlich noch dadurch unterscheiden, dass sie unterschiedlich erhaben bzw. vertieft zueinander in dem Tastenfeld 2 angeordnet sind und unterschiedliche Oberflächenwölbungen aufweisen. So sind die STOP-Taste 3a und die N-Taste 3c gegenüber den anderen Tasten 3b, 3d vertieft bzw. weniger erhaben angeordnet, um eine versehentliche Betätigung zu vermeiden. Zur weiteren Verbesserung der insbesondere taktilen Unterscheidbarkeit sind die R-Taste 3b und die D-Taste 3d konvex 10 gewölbt während die STOP-Taste 3a und die N-Taste 3c konkav 11 gewölbt sind.

Im Vergleich zu einem Schalt- oder Wählhebel bietet das Tastenfeld 2 mit Tasten 3 den Vorteil einer erheblichen Kosteneinsparung bei mindestens gleich guter Funktionssicherheit. Als positiver Nebeneffekt ergibt sich noch eine Erhöhung der passiven Sicherheit durch die Anordnung einer weitgehend ebenen Fläche des Tastenfeldes 2 anstelle eines relativ stumpfen, in den Innenraum des Kraftfahrzeuges hineinragenden Gegenstandes des Schalt- bzw. Wählhebels. Durch die ergonomisch günstige und individuell einstellbare Anordnung des Tastenfeldes 2 ergibt sich eine komfortable Bedienung der Tasten 3. Aufgrund der prägnant unterschiedlichen Ausbildung und Anordnung der Tasten ist deren Funktion und Lage innerhalb kurzer Zeit erlernbar und dann taktil identifizierbar, so dass die Funktionen mit hoher Bedienungssicherheit ohne visuellen Kontakt auslösbar sind.

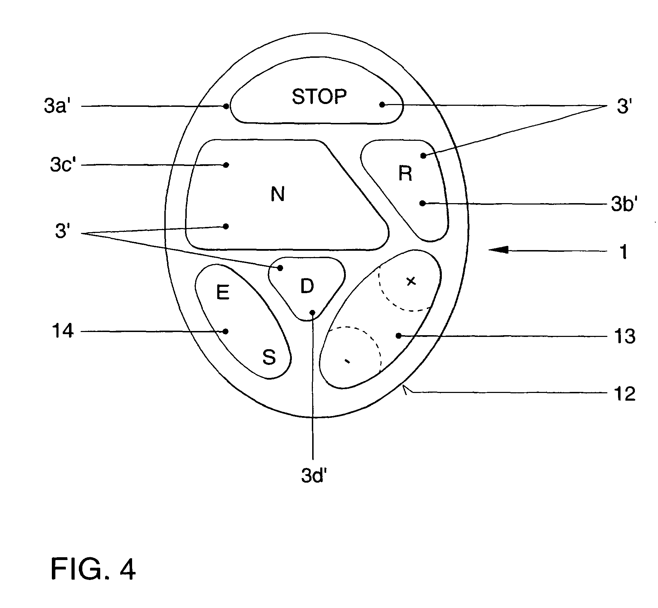

In der Figur 4 ist eine alternative Ausbildung der erfindungsgemäßen Bedienungsvorrichtung 1' bzw. des Tastenfeldes 2' in einer Draufsicht abgebildet. In diesem Fall ist die Grundform des Tastenfeldes 2' oval bzw. elliptisch 12. Zusätzlich zu der STOP-Taste 3a', der R-Taste 3b', der N-Taste 3c', und der D-Taste 3d' weist das Tastenfeld 2' eine Schaltwippe 13 zur manuellen zur manuellen Schaltauslösung im Manuellmodus und zur Aktivierung des Manuellmodus und einen Umschalter 14 zum Wechsel zwischen einem Eco-Steuerungsprogramm und einem Sport-Steuerungsprogramm im Automatikmodus auf. In diesem Fall kann ein wahlweise im Manuell- und Automatikmodus betreibbares Getriebe alleine mittels des Tastenfeldes 2' bedient werden, so dass weitere Schaltelemente, die z.B. am Lenkrad angeordnet sein könnten, eingespart werden können. Dennoch ist das Tastenfeld 2' übersichtlich aufgebaut und die Tasten 3' bzw. Schalter 13, 14 sind anhand ihrer Position, Grundform, Größe, Erhabenheit, und Oberflächenkontur schnell und eindeutig, insbesondere taktil, identifizierbar, so dass eine schnelle Erlernbarkeit der Bedienung und eine hohe Bedienungssicherheit gegeben ist.

### BEZUGSZEICHENLISTE

- 1: Bedienungsvorrichtung
- 1': Bedienungsvorrichtung
- 2: Tastenfeld
- 2': Tastenfeld
- 3: Tasten
- 3': Tasten
- 3a: STOP-Taste
- 3a': STOP-Taste
- 3b: R-Taste
- 3b': R-Taste
- 3c: N-Taste
- 3c': N-Taste
- 3d: D-Taste
- 3d': D-Taste
- 4: rund
- 5: Mittelkonsole
- 6: Fahrzeuglängsrichtung
- 7: Längsverschiebung, Längsbewegung
- 8: Hochachse
- 9: Drehung
- 10: konvex
- 11: konkav
- 12: oval, elliptisch
- 13: Schaltwippe
- 14: Umschalter

## Patentansprüche

1. Bedienungsvorrichtung zur Schaltsteuerung eines Kraftfahrzeuggetriebes, dessen Schaltvorgänge nicht mechanisch ansteuerbar und hilfskraftgestützt durchführbar sind, und das in einem Manuellmodus mit weitgehend manueller Schaltauslösung und / oder in einem Automatikmodus mit weitgehend automatischer Schaltauslösung betreibbar ist, wobei ein Tastenfeld (2, 2') mit Tasten (3, 3') anstelle eines Schalt- bzw. Wählhebels zur Auslösung der Schaltvorgänge vorgesehen ist, das Tastenfeld (2, 2') an einem ergonomisch günstigen Ort im Fahrerraum des Kraftfahrzeuges angeordnet ist, und die Tasten (3, 3') in dem Tastenfeld (2, 2') taktil identifizierbar ausgebildet und angeordnet sind, **dadurch gekennzeichnet, dass** das Tastenfeld (2, 2') zur individuellen fahrerbezogenen Justierbarkeit verstellbar ausgebildet und angeordnet ist.

2. Bedienungsvorrichtung nach Anspruch 1, **dadurch gekennzeichnet,** däss das Tastenfeld (2) in Fahrzeuglängsrichtung (6) verschiebbar (7) und/oder um eine Hochachse (8) drehbar (9) ausgebildet ist.

3. Bedienungsvorrichtung nach Anspruch 2, **dadurch gekennzeichnet, dass** das Tastenfeld (2) zur Realisierung der Drehbarkeit rund (4) ausgebildet ist und / oder in einem drehbar gelagerten trommelförmigen Gehäuse angeordnet ist.

4. Bedienungsvorrichtung nach einem der vorangehenden Ansprüche, **dadurch gekennzeichnet, dass** das Tastenfeld (2, 2') mindestens eine Taste (3a, 3a') zur Auslösung einer Feststellung des Kraftfahrzeuges im Stillstand , eine Taste (3b, 3b') zur Auslösung einer Schaltung in den Rückwärtsgang , eine Taste (3c, 3c') zur Auslösung einer Schaltung in den Leerlauf bzw. einer Trennung des Antriebsstranges von dem Antriebsmotor, und eine Taste (3d, 3d') zur Auslösung einer Aktivierung des Vorwärtsfahrbereiches und / oder zur Aktivierung des Automatikmodus aufweist.

5. Bedienungsvorrichtung nach Anspruch 4, **dadurch gekennzeichnet, dass** das Tastenfeld (2, 2') bei einer alleinigen Verwendung zur Bedienung der Schaltsteuerung zusätzlich eine Taste zur Sperrung eines oder mehrerer hoher Gänge bzw. zur Aktivierung von Hochschaltbegrenzungsstufen aufweist.

6. Bedienungsvorrichtung nach Anspruch 4, **dadurch gekennzeichnet, dass** das Tastenfeld (2') zusätzlich zwei Tasten oder eine Schaltwippe (13) zur manuellen sequentiellen Schaltauslösung im Manuellmodus und / oder zur Aktivierung des Manuellmodus aufweist.

7. Bedienungsvorrichtung nach einem der Ansprüche 4 bis 6, **dadurch gekennzeichnet, dass** das Tastenfeld (2') zusätzlich eine Taste oder einen Schalter (14) zum Wechsel zwischen mehreren Steuerungsprogrammen wie ökonomisch oder sportlich des Automatikmodus aufweist.

8. Bedienungsvorrichtung nach einem der vorangehenden Ansprüche, **dadurch gekennzeichnet, dass** das Tastenfeld (2) auf, an oder in der Mittelkonsole (5) des Kraftfahrzeuges angeordnet ist.

9. Bedienungsvorrichtung nach einem der Ansprüche 1 bis 7, **dadurch gekennzeichnet, dass** das Tastenfeld (2, 2') auf, an oder in dem Armaturenbrett des Kraftfahrzeuges oder einer mit dem Armaturenbrett in Verbindung stehenden Konsole angeordnet ist.

10. Bedienungsvorrichtung nach einem der Ansprüche 1 bis 7, **dadurch gekennzeichnet, dass** das Tastenfeld (2, 2') auf, an oder in einem Satellitenträger der Lenksäule des Kraftfahrzeuges angeordnet ist.

11. Bedienungsvorrichtung nach einem der Ansprüche 1 bis 7, **dadurch gekennzeichnet, dass** das Tastenfeld (2, 2') auf, an oder in einer Türverkleidung der Fahrertür oder einer mit der Fahrertür in Verbindung stehenden Konsole angeordnet ist.

12. Bedienungsvorrichtung nach einem der vorangehenden Ansprüche, **dadurch gekennzeichnet, dass** die Tasten (3, 3') in einem nichtlinearen Schema auf dem Tastenfeld (2, 2') angeordnet sind, wobei jeder Taste (3, 3') eine eindeutig identifizierbare Position in dem Schema zugeordnet ist.

13. Bedienungsvorrichtung nach einem der vorangehenden Ansprüche, **dadurch gekennzeichnet, dass** die Tasten (3, 3') des Tastenfeldes (2, 2') unterschiedliche Grundformen aufweisen.

14. Bedienungsvorrichtung nach einem der vorangehenden Ansprüche, **dadurch gekennzeichnet, dass** die Tasten (3, 3') des Tastenfeldes (2, 2') unterschiedlich groß ausgebildet sind.

15. Bedienungsvorrichtung nach Anspruch 14, **dadurch gekennzeichnet, dass** die N-Taste (3c, 3c') in Relation zu den übrigen Tasten besonders groß ausgebildet ist und / oder einen größeren Betätigungswiderstand aufweist.

16. Bedienungsvorrichtung nach einem der vorangehenden Ansprüche, **dadurch gekennzeichnet, dass** die Tasten (3, 3') unterschiedlich vertieft und / oder erhaben in dem Tastenfeld (2, 2') angeordnet sind.

17. Bedienungsvorrichtung nach Anspruch 16, **dadurch gekennzeichnet, dass** die STOP- bzw. P-Taste (3a, 3a') und die N-Taste (3c, 3c') vertieft und / oder die R-Taste (3b, 3b') und die D- bzw. E-Taste (3d, 3d') erhaben in dem Tastenfeld angeordnet sind.

18. Bedienungsvorrichtung nach einem der vorangehenden Ansprüche, **dadurch gekennzeichnet, dass** die Tasten (3, 3') des Tastenfeldes (2, 2') unterschiedliche Oberflächenkonturen aufweisen.

19. Bedienungsvorrichtung nach Anspruch 18, **dadurch gekennzeichnet, dass** die Oberflächen der Tasten (3, 3') unterschiedlich gewölbt sind.

20. Bedienungsvorrichtung nach Anspruch 18 oder 19, **dadurch gekennzeichnet, dass** die Oberflächen der Tasten (3, 3') mit unterschiedlichen Oberflächenstrukturen versehen sind.

21. Bedienungsvorrichtung nach einem der Ansprüche 18 bis 20, **dadurch gekennzeichnet, dass** die Tasten (3, 3') an ihren Oberflächen ertastbare Symbole aufweisen.

22. Bedienungsvorrichtung nach einem der vorangehenden Ansprüche, **dadurch gekennzeichnet, dass** die Tasten (3, 3') unterschiedliche Farbkennzeichnungen aufweisen.

23. Bedienungsvorrichtung nach einem der vorangehenden Ansprüche, **dadurch gekennzeichnet, dass** die Tasten (3, 3') beleuchtbar ausgebildet sind, wobei die Tastenbeleuchtung einheitlich in einem Farbton oder unterschiedlich in mehreren Farbtönen ausgebildet ist.

24. Bedienungsvorrichtung nach Anspruch 23, **dadurch gekennzeichnet, dass** die Tastenbeleuchtung abhängig vom Aktivierungsstatus in der Helligkeit und / oder in der Farbe veränderbar ausgebildet ist.

25. Bedienungsvorrichtung nach einem der vorangehenden Ansprüche, **dadurch gekennzeichnet, dass** das Tastenfeld (2, 2') zur Anzeige des Aktivierungsstatus mit einer Statusanzeige kombiniert ist, und dass die Statusanzeige im Blickfeld des Fahrers angeordnet ist.

## Claims

1. Operating device for shift control of a motor vehicle gearbox, the shift processes of which can be non-mechanically actuated and carried out with power assistance and which can be operated in a manual mode with substantially manual shift triggering and/or in an automatic mode with substantially automatic shift triggering, with a button field (2, 2') which has buttons (3, 3') being provided for triggering the shift processes instead of a shift or selector lever, the button field (2, 2') being arranged at an ergonomically favourable location in the driver's compartment of the motor vehicle, and with the buttons (3, 3') in the button field (2, 2') being designed and arranged such that they can be identified in a tactile manner, **characterized in that** the button field (2, 2') is designed and arranged so as to be adjustable for individual driver-specific alignability.

2. Operating device according to Claim 1, **characterized in that** the button field (2) is designed to be displaceable (7) in the vehicle longitudinal direction (6) and/or rotatable (9) about a vertical axis (8).

3. Operating device according to Claim 2, **characterized in that**, to realize the" rotatability, the button field (2) is of round (4) design and/or is arranged in a rotatably mounted drum-shaped housing.

4. Operating device according to one of the preceding claims, **characterized in that** the button field (2, 2') has at least one button (3a, 3a') for triggering arresting of the motor vehicle at a standstill, a button (3b, 3b') for triggering a shift into the reverse gear, a button (3c, 3c') for triggering a shift into idle or a separation of the drivetrain from the drive engine, and a button (3d, 3d') for triggering an activation of the forward drive range and/or for activating the automatic mode.

5. Operating device according to Claim 4, **characterized in that** the button field (2, 2'), if used solely for operation for shift control, additionally has a button for blocking one or more high gears and/or for activating upshift limiting stages.

6. Operating device according to Claim 4, **characterized in that** the button field (2') additionally has two buttons or a shift rocker (13) for manual sequential shift triggering in the manual mode and/or for activating the manual mode.

7. Operating device according to one of Claims 4 to 6, **characterized in that** the button field (2') additionally has a button or a switch (14) for changing between a plurality of control programs, such as economy or sport, of the automatic mode.

8. Operating device according to one of the preceding claims, **characterized in that** the button field (2) is arranged on or in the central console (5) of the motor vehicle.

9. Operating device according to one of Claims 1 to 7, **characterized in that** the button field (2, 2') is arranged on or in the dashboard of the motor vehicle or a console connected to the dashboard.

10. Operating device according to one of Claims 1 to 7, **characterized in that** the button field (2, 2') is arranged on or in a satellite carrier of the steering column of the motor vehicle.

11. Operating device according to one of Claims 1 to 7, **characterized in that** the button field (2, 2') is arranged on or in a door lining of the driver's door or of a console connected to the driver's door.

12. Operating device according to one of the preceding claims, **characterized in that** the buttons (3, 3') are arranged in a non-linear pattern on the button field (2, 2'), with each button (3, 3') being assigned a clearly identifiable position in the pattern.

13. Operating device according to one of the preceding claims, **characterized in that** the buttons (3, 3') of the button field (2, 2') have different outline shapes.

14. Operating device according to one of the preceding claims, **characterized in that** the buttons (3, 3') of the button field (2, 2') are of different sizes.

15. Operating device according to Claim 14, **characterized in that** the N button (3c, 3c') is particularly large in relation to the other buttons and/or has a greater actuation resistance.

16. Operating device according to one of the preceding claims, **characterized in that** the buttons (3, 3') are arranged so as to be recessed and/or elevated to different extents in the button field (2, 2').

17. Operating device according to Claim 16, **characterized in that** the STOP button or P button (3a, 3a') and the N button (3c, 3c') are arranged so as to be recessed in the button field, and/or the R button (3b, 3b') and the D and/or E button (3d, 3d') are arranged so as to be elevated in the button field.

18. Operating device according to one of the preceding claims, **characterized in that** the buttons (3, 3') of the button field (2, 2') have different surface contours.

19. Operating device according to Claim 18, **characterized in that** the surfaces of the buttons (3, 3') are domed to different extents.

20. Operating device according to Claim 18 or 19, **characterized in that** the surfaces of the buttons (3, 3') are provided with different surface structures.

21. Operating device according to one of Claims 18 to 20, **characterized in that** the buttons (3, 3') have perceptible symbols on their surfaces.

22. Operating device according to one of the preceding claims, **characterized in that** the buttons (3, 3') are differently colour coded.

23. Operating device according to one of the preceding claims, **characterized in that** the buttons (3, 3') are designed to be illuminable, with the button illumination being uniform with a single colour, or being different with a plurality of colours.

24. Operating device according to Claim 23, **characterized in that** the button illumination is designed to be variable in terms of brightness and/or colour as a function of the activation status.

25. Operating device according to one of the preceding claims, **characterized in that**, for the display of the activation status, the button field (2, 2') is combined with a status display, and **in that** the status display is arranged in the field of view of the driver.

## Revendications

1. Dispositif de commande de changement de vitesse de transmission de véhicule dont les processus de changement de vitesse sont réalisables avec une commande non mécanique et avec un soutien par une force auxiliaire et qui peut être exploitée selon un mode manuel, avec un déclenchement de changement de vitesse largement manuel, et / ou selon un mode automatique, avec un déclenchement de changement de vitesse largement automatique, un clavier (2, 2') doté de touches (3, 3') étant prévu à la place d'un levier de sélection et/ou de changement de vitesse pour déclencher les processus de changement de vitesse, le clavier (2, 2') étant disposé à un endroit de l'habitacle du véhicule automobile avantageux sur le plan ergonomique et les touches (3, 3') étant agencées et réalisées de façon à être identifiables sur le clavier (2, 2') par voie tactile, **caractérisé en ce que** le clavier (2, 2') est agencé et réalisé de façon à être mobile pour permettre un réglage personnalisé adapté à chaque conducteur.

2. Dispositif de commande selon la revendication 1, **caractérisé en ce que** le clavier (2) est réalisé de façon à pouvoir être déplacé (7) dans la direction longitudinale du véhicule (6) et/ou à pouvoir être pivoté (9) autour d'un axe vertical (8).

3. Dispositif de commande selon la revendication 2, **caractérisé en ce que** le clavier (2) prend une forme ronde (4) de façon à pouvoir être pivoté et / ou est disposé dans un boîtier en forme de tambour disposé de façon pivotante.

4. Dispositif de commande selon l'une quelconque des revendications précédentes, **caractérisé en ce que** le clavier (2, 2') comporte au moins une touche (3a, 3a') pour le déclenchement d'une immobilisation du véhicule automobile à l'arrêt, une touche (3b, 3b') pour le déclenchement d'un changement de vitesse en marche arrière, une touche (3c, 3c') pour le déclenchement d'un changement de vitesse au point mort et/ou d'une séparation de la chaîne cinématique et du moteur d'entraînement et une touche (3d, 3d') pour le déclenchement d'une activation de la zone de marche avant et / ou d'activation du mode automatique.

5. Dispositif de commande selon la revendication 4, **caractérisé en ce que** le clavier (2, 2') comporte en outre, en cas d'utilisation de la seule commande de changement de vitesse, une touche de blocage d'un ou de plusieurs rapports élevés et/ou d'activation des étages de limitation de changement de vitesse vers les rapports supérieurs.

6. Dispositif de commande selon la revendication 4, **caractérisé en ce que** le clavier (2') comporte en outre deux touches ou un levier basculant de changement de vitesse (13) pour le déclenchement séquentiel manuel de changement de vitesse en mode manuel et / ou pour l'activation du mode manuel.

7. Dispositif de commande selon l'une quelconque des revendications 4 à 6, **caractérisé en ce que** le clavier (2') comporte en outre une touche ou un commutateur (14) pour basculer entre plusieurs programmes de commande, tel que le programme économique ou sportif du mode automatique.

8. Dispositif de commande selon l'une quelconque des revendications précédentes, **caractérisé en ce que** le clavier (2) est disposé sur, contre ou dans la console centrale (5) du véhicule automobile.

9. Dispositif de commande selon l'une quelconque des revendications 1 à 7, **caractérisé en ce que** le clavier (2, 2') est disposé sur, contre ou dans le tableau de bord du véhicule automobile ou d'une console reliée au tableau de bord.

10. Dispositif de commande selon l'une quelconque des revendications 1 à 7, **caractérisé en ce que** le clavier (2, 2') est disposé sur, contre ou dans un support satellite de la colonne de direction du véhicule automobile.

11. Dispositif de commande selon l'une quelconque des revendications 1 à 7, **caractérisé en ce que** le clavier (2, 2') est disposé sur, contre ou dans une garniture de porte de la portière du conducteur ou d'une console reliée à la portière du conducteur.

12. Dispositif de commande selon l'une quelconque des revendications précédentes, **caractérisé en ce que** les touches (3, 3') sont disposées sur le clavier (2, 2') selon un schéma non linéaire, chaque touche (3, 3') étant associée à une position clairement identifiable sur le schéma.

13. Dispositif de commande selon l'une quelconque des revendications précédentes, **caractérisé en ce que** les touches (3, 3') du clavier (2, 2') présentent différentes formes de base.

14. Dispositif de commande selon l'une quelconque des revendications précédentes, **caractérisé en ce que** les touches (3, 3') du clavier (2, 2') sont de différentes tailles.

15. Dispositif de commande selon la revendication 14, **caractérisé en ce que** la touche N (3c, 3c') est significativement plus grande que les autres touches et / ou comporte une résistance à l'actionnement plus importante.

16. Dispositif de commande selon l'une quelconque des revendications précédentes, **caractérisé en ce que** les touches (3, 3') sont plus ou moins enfoncées et / ou saillantes sur le clavier (2, 2').

17. Dispositif de commande selon la revendication 16, **caractérisé en ce que** la touche STOP et/ou P, (3a, 3a') et la touche N (3c, 3c') sont enfoncées et / ou que la touche R (3b, 3b') et la touche D et/ou E (3d, 3d') ressortent de façon saillante sur le clavier.

18. Dispositif de commande selon l'une quelconque des revendications précédentes, **caractérisé en ce que** les touches (3, 3') du clavier (2, 2') présentent des contours de surface différents.

19. Dispositif de commande selon la revendication 18, **caractérisé en ce que** les surfaces des touches (3, 3') sont plus ou moins bombées.

20. Dispositif de commande selon la revendication 18 ou 19, **caractérisé en ce que** les surfaces des touches (3, 3') sont pourvues de structures de surface différentes.

21. Dispositif de commande selon l'une quelconque des revendications 18 à 20, **caractérisé en ce que** les touches (3, 3') sont dotées de symboles tactiles au niveau de leur surface.

22. Dispositif de commande selon l'une quelconque des revendications précédentes, **caractérisé en ce que** les touches (3, 3') comportent des codes de couleur différents.

23. Dispositif de commande selon l'une quelconque des revendications précédentes, **caractérisé en ce que** les touches (3, 3') sont réalisées de façon à pouvoir être éclairées, l'éclairage des touches étant réalisé soit de façon uniforme dans un seul ton soit avec des tons différents.

24. Dispositif de commande selon la revendication 23, **caractérisé en ce que** l'éclairage des touches est conçu de façon à pouvoir être modifié en fonction de l'état d'activation du mode nuit et / ou d'une couleur donnée.

25. Dispositif de commande selon l'une quelconque des revendications précédentes, **caractérisé en ce que** le clavier (2, 2') est combiné à un affichage de l'état pour afficher l'état d'activation et que l'affichage de l'état est placé dans le champ de vision du conducteur.
